# EUROPÄISCHE PATENTSCHRIFT

(11) **EP 2 529 047 B1**
(45) Veröffentlichungstag und Bekanntmachung des Hinweises auf die Patenterteilung: **30.04.2014**
(21) Anmeldenummer: 10801169.3
(22) Anmeldetag: 30.12.2010
(51) Int. Cl.: D06F 37/04, D06F 37/20, D06F 37/22

(54) **WASCHMASCHINE MIT EINER WÄSCHETROMMEL**
WASHING MACHINE COMPRISING A LAUNDRY DRUM
LAVE-LINGE POURVU D'UN TAMBOUR DE LAVAGE

(30) Priorität: 28.01.2010 DE 102010001299
(43) Veröffentlichungstag der Anmeldung: 05.12.2012
(73) Patentinhaber: BSH Bosch und Siemens Hausgeräte GmbH, 81739 München (DE)
(72) Erfinder: EGLMEIER, Hans, 10587 Berlin (DE); HANAU, Andreas, 12359 Berlin (DE)
(86) Internationale Anmeldenummer: PCT/EP2010/070901
(87) Internationale Veröffentlichungsnummer: WO 2011/091941

(56) Entgegenhaltungen:
- EP-A2- 1 433 890
- DE-A1- 3 134 633
- JP-A- 2006 136 599
- JP-A- 2009 039 319

## Beschreibung

Die Erfindung betrifft eine Waschmaschine mit einer Wäschetrommel, die innerhalb eines Laugenbehälters drehbar gelagert ist, der innerhalb eines umschließenden Gehäuses fest mit ihm verbunden ist, deren Drehachse gegenüber dem Laugenbehälter in ihrer Höhe variabel ist und die durch außerhalb des Laugenbehälters angebrachte elastische Elemente zusammen mit einer Antriebseinheit innerhalb des Gehäuses schwingend aufgehängt ist.

Eine solche Waschmaschine ist aus der EP 1 433 890 A2 bekannt. Darin ist für die Wäschetrommel innerhalb des Laugenbehälters ein ausreichend groß bemessener Schwingraum vorgesehen, damit sich die elastisch bewegliche Wäschetrommel in allen Programmabschnitten der Wäschebehandlung innerhalb des Laugenbehälters frei drehen kann, ohne irgendwelche Teile im Laugenbehälter, z. B. die Heizkörper, zu touchieren. Der Abstand der Wandungsteile der Wäschetrommel von denen des Laugenbehälters ist daher deutlich höher als bei konventionellen Waschmaschinen, bei denen sich der gesamte Laugenbehälter zusammen mit der Wäschetrommel innerhalb des Gehäuses schwingend bewegen, die Wäschetrommel sich innerhalb des Laugenbehälters jedoch lediglich frei drehen kann. Gegenüber solchen konventionellen Waschmaschinen ist daher bei Waschmaschinen gemäß der EP 1 433 890 A2 die im Laugenbehälter befindliche Wassermenge erheblich höher, was zu einer Erhöhung des Wasserverbrauchs führen würde, den man anstelle dessen eher verringern möchte.

Der Erfindung liegt daher die Aufgabe zugrunde, eine Waschmaschine der eingangs genannten Art so zu konstruieren bzw. ein Verfahren vorzuschlagen, dass sich einerseits der Nachteil des höheren Wasserverbrauchs vermeiden andererseits aber auch die relative Lage der Wäschetrommel zum Laugenbehälter anpassen lässt.

Erfindungsgemäß wird diese Aufgabe durch die Merkmale der Ansprüche 1 und 9 gelöst. Auf diese Weise kann die relative Lage der Wäschetrommel zum Laugenbehälter so eingestellt werden, dass nur ebenso viel Wasser im Laugenbehälter vorhanden sein muss, wie bei konventionellen Waschmaschinen. Die individuelle Einstellbarkeit der Höhenlage und ggf. auch des Winkels der Drehachse eröffnet darüber hinaus sogar die Möglichkeit, die relative Lage der Wäschetrommel in Abhängigkeit vom jeweiligen Programmabschnitt der Wäschebehandlung einzustellen. Da die Bewegung der Wäschetrommel im Abschnitt der aktiven Waschphase selten so groß ist wie beim Schleudern, kann im Abschnitt der aktiven Waschphase die Höhenlage der Trommel geringer eingestellt sein als beim Schleudern. Dadurch ist es möglich, die am Waschprozess beteiligte Wassermenge entsprechend gering zu halten, den Abstand beim Schleudern aber gerade groß zu wählen, damit Auslenkungen einer unwuchtigen Wäschetrommel unschädlich sind und für die abgeschleuderte Lauge viel Platz bleibt.

In einer vorteilhaften Fortbildung der Erfindung ist die Konstruktion der Waschmaschine so getroffen, dass die Wäschetrommel an ihrer Rückseite eine steife Rückwand aufweist, die fest mit der Antriebswelle eines Trommelantriebs verbunden ist, die in einer Trägerscheibe gelagert ist, und dass der Laugenbehälter im wesentlichen aus einem Mantelteil geformt ist, der frontseitig fest und dicht mit dem Gehäuse verbunden ist und rückseitig mit einem Rand des Mantelteils eine Öffnung bildet, in welche die Wäschetrommel in den Laugenbehälter von hinten eingesetzt ist, deren Trägerscheibe über eine ringförmige Faltenmembran mit dem Rand des Mantelteils dichtend verbunden ist. Konstruktionen, die solchen Maßnahmen folgen, haben die günstigsten Voraussetzungen für die Anbringung einer Lageneinstelleinrichtung.

Wenn gemäß einer weiteren Fortbildung mit der Trägerscheibe mindestens zwei Trägerarme verbunden sind, welche den Rand des Mantelteils übergreifen sowie außerhalb des Laugenbehälters etwa parallel zur Kontur des Mantelteils nach vorn gerichtet sind und über elastischen Verbindungen an das Gehäuse angelenkt sind, kann die Lageneinstelleinrichtung mittelbar an dem mit dem Lager fest verbundenen Teil angreifen.

In einem solchen Fall kann die Lageneinstelleinrichtung gemäß einer Ausbildung der Erfindung vorteilhafterweise zwischen mindestens einer der elastischen Verbindungen und dem Gehäuse eingebaut sein und zwei Einstell-Freiheitsgrade aufweisen, nämlich einen in Richtung der Tiefe des Gehäuses und einen zweiten in Richtung der Höhe des Gehäuses. Auf diese Weise sind die Einstellmöglichkeiten voneinander derart trennbar, dass die Höhe und der Winkel unabhängig voneinander eingestellt werden können.

So können der Freiheitsgrad in Richtung der Höhe des Gehäuses der Einstellbarkeit der Höhe der Drehachse der Wäschetrommel in Bezug zum Laugenbehälter und/oder der Freiheitsgrad in Richtung der Tiefe des Gehäuses der Einstellbarkeit des Winkels der Drehachse der Wäschetrommel zugeordnet sein.

Wie schon erwähnt, kann bei einer Waschmaschine mit einer Programmsteuereinrichtung und mit darin gespeicherten Programmsequenzen für mindestens eine aktive Waschphase und für mindestens eine Schleuderphase in der Programmsteuereinrichtung für die Höhen- und/oder die Winkellage der Drehachse der Wäschetrommel ein jeweils zugeordnetes Maß in Abhängigkeit von den Programmsequenzen vorbestimmt sein. Wenn nämlich im Abschnitt einer aktiven Waschphase eine geringe Höhenbewegung der Wäschetrommel zu erwarten ist, kann in einem solchen Programmabschnitt das Maß für die Absenkung der Drehachse der Wäschetrommel so groß sein, dass der untere Scheitel der Wäschetrommel vom Boden des Laugenbehälters nur einen geringen Abstand hat. Dann kann auch die sogenannte aktive Laugenmenge - wie allgemein erwünscht - klein gehalten werden. Andererseits soll die Wäschetrommel sich beim Schleudern stärker auf- und abwärts bewegen dürfen. Dafür können die Höhenlage und/oder die Winkellage der Drehachse insofern entsprechend eingestellt werden, dass der untere Scheitel der Wäschetrommel nun einen ausreichend großen Abstand zum Boden des Laugenbehälters hat, um Berührungen mit Teilen des Laugenbehälters zu vermeiden und genügend Raum für die abgeschleuderte Laugenmenge zu bieten.

Weitere vorteilhafte Ausbildungen der Erfindung ergeben sich durch Maßnahmen aus den Unteransprüchen und aus der Beschreibung einzeln oder in beliebiger Kombination miteinander.

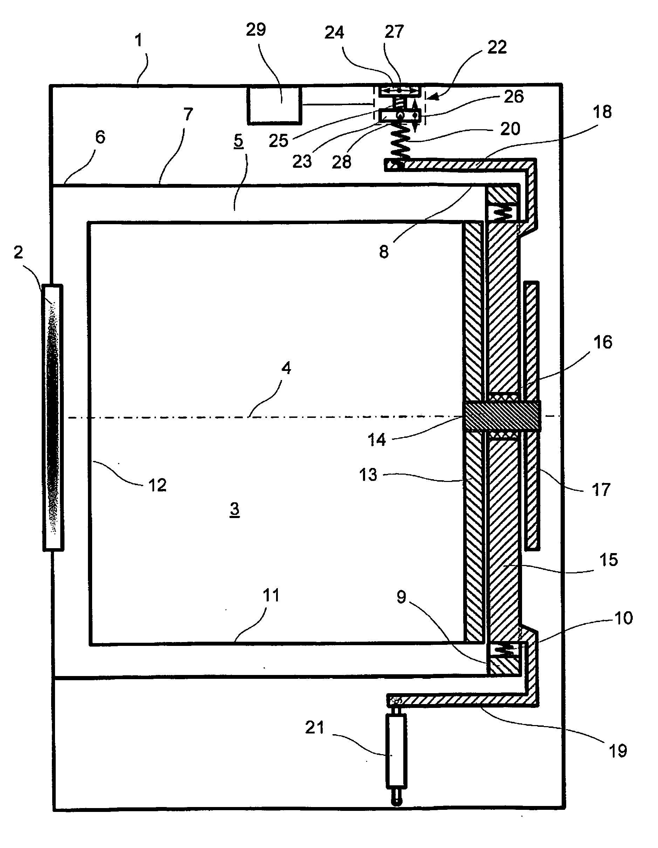

Anhand eines in der Zeichnung dargestellten Ausführungsbeispiels ist die Erfindung näher erläutert. In der Zeichnung zeigt die einzige Figur die seitliche Durchsicht durch das Gehäuse einer erfindungsgemäß ausgebildeten Waschmaschine mit einem feststehenden Laugenbehälter und einer darin schwingend angeordneten Wäschetrommel.

Das Gehäuse 1 der Waschmaschine hat eine frontseitige Tür 2 zum Beoder Entladen der Wäschetrommel 3, die innerhalb eines Laugenbehälters 5 um eine Drehachse 4 drehbar gelagert ist. Der Laugenbehälter 5 ist an seinem frontseitigen Ende 6 fest und dichtend mit dem Gehäuse verbunden. Die Tür 2 ist im geschlossenen Zustand ebenfalls dicht. Der Laugenbehälter 5 hat einen Mantelteil 7, der im Wesentlichen zylindrisch geformt ist. Sein rückwärtiges Ende 8 geht in einen ringförmigen Rand 9 über, der verstärkt ist und dadurch Bewegungskräfte aufnehmen kann, die über eine Faltenmembran 10 auf ihn übertragen werden können.

Die Wäschetrommel 3 hat ebenfalls einen zylindrischen Mantel 11, der frontseitig durch einen zu Tür 2 offenen Stirnboden 12 und rückseitig durch eine steife Rückwand 13 abgeschlossen ist. Durch die Formung des Mantels 11 mit Stirnboden 12 und steifer Rückwand 13 ist die Wäschetrommel 3 insgesamt ein sehr steifes Gebilde und kann mittels einer stabilen Antriebswelle 14 fliegend gelagert werden. Dazu ist in der Trägerscheibe 15 ein Lager 16 mit zwei Lagerebenen vorgesehen, das die Antriebswelle 14 durch die Trägerscheibe 15 hindurch an einen Antrieb 17 führt. Dieser Antrieb ist nur schematisch angedeutet und kann ein Riemengetriebe für einen nicht dargestellten Antriebsmotor, ein Direktantriebs-Motor o. ä. sein.

Zwischen der Peripherie der Trägerscheibe 15 und dem Rand 9 des Laugenbehälters 5 ist die Faltenmembran 10 eingespannt. Sie dient vor allem der Abdichtung des Laugenbehälters 5 gegenüber der Umgebung. Diese Abdichtung muss aber eben auch elastisch sein, damit sich die über die Antriebswelle 14 mit der Wäschetrommel 3 gekoppelte Trägerscheibe 15 gegenüber dem Laugenbehälter 5 auch bewegen kann. Diese Trägerscheibe 15 hat nämlich an ihrem Umfang mindestens zwei Trägerarme 18 und 19, die den Rand 9 des Laugenbehälters 5 übergreifen und wenigstens annähernd parallel zur Kontur des Mantelteils 7 des Laugenbehälters 5 sich auf die Frontseite des Gehäuses 1 hin erstrecken. In einem anderen Beispiel kann die Trägerscheibe 15 mit nur einem Trägerarm 18 oder 19 auskommen, wenn hier ein so genanntes Federbein, eine Kombination aus Feder und Stoßdämpfer angreift (nicht dargestellt), oder mehr als zwei Trägerarme 18 und 19 aufweisen, wenn die Angriffe von Federung und Dämpfung differenzierter verteilt sein sollen. Mittels dieser Trägerarme 18 und 19 wird die Wäschetrommel innerhalb des Gehäuses 1 und innerhalb des Laugenbehälters 5 in einer bestimmten Höhen- und Winkellage gehalten.

Dazu dienen elastische Verbindungen 20 und 21, von denen die Verbindung 20 durch eine oder mehrere Federn dargestellt ist, während die Verbindung 21 durch einen oder mehrere Stoßdämpfer gekennzeichnet ist. Die Stoßdämpfer 21 wirken so wie solche in konventionellen Waschmaschinen. Die Federn 20 sind im vorliegenden Beispiel allerdings über je eine Lageneinstelleinrichtung 22 mit dem Gehäuse 1 verbunden. Diese Lageneinstelleinrichtung besteht im Wesentlichen aus einem heb- und senkbaren Höhenstellblock 23, einem Längenstellblock 24 und einer die beiden verbindenden Gewindespindel 25. Die Gewindespindel 25 kann auf hier nicht näher dargestellte Weise so gedreht werden, dass sich der Höhenstellblock 23 heben und senken lässt, das ist der Freiheitsgrad 26 in Richtung der Höhenpositionierung der Drehachse 4. Dadurch kann die Drehachse 4 in ihrer Höhenposition gegenüber dem Laugenbehälter 5 eingestellt werden. Der Längenstellblock 24 kann auf nicht näher dargestellte Weise in eine Tiefenposition zum Gehäuse 1 eingestellt werden - also in Richtung des Freiheitsgrads 27 in Richtung der Tiefenpositionierung innerhalb des Gehäuse 1 -, so dass der Verbindungspunkt 28 der Feder 20 zum Höhenstellblock 23 mehr oder weniger weit in die Gehäusetiefe bewegt wird und damit die Winkellage der Drehachse 4 der Wäschetrommel 3 beeinflusst.

Für die Umsetzung der Höhen- und Winkellage-Einstellung der Drehachse 4 der Wäschetrommel 3 sind beliebig viele andersartige Lageneinstelleinrichtungen denkbar. Sie alle fallen unter den Gedanken der im Anspruch 1 gekennzeichneten Erfindung. Ebenso ist die Ausgestaltung der Rückwand 13 und der Trägerscheibe 15 sowie der Trägerarme 18 und 19 hier nur schematisch angedeutet und werden bei einer Umsetzung der erfindungsgemäßen Maßnahmen den konstruktiven Voraussetzungen der vorhandenen Waschmaschine anzupassen sein. Dasselbe gilt für entsprechende Anpassungsmaßnahmen an der Tür 2, am Anschluss der Öffnung im Stirnboden 12 sowie für die Gestaltung des Laugenbehälters 5 und der elastischen Verbindungen 20 und 21 und den Trommelantrieb.

Die Vorteile einer erfindungsgemäßen gegenüber bekannten Waschmaschinen sind von großer Zahl: Da der Abstand zwischen dem Mantel 11 der Wäschetrommel 3 und dem Mantelteil 7 des Laugenbehälters 5 am Boden des Laugenbehälters 5 beim Waschen und beim Spülen verringert werden kann und zum Schleudern auf einen eigenen, größeren Wert gebracht werden kann, kann auch die so genannte tote Flotte-das ist die nicht in der Wäsche gebundene Lauge - erheblich verringert werden.

Die neue Waschmaschine kann mit neuen verfahrenstechnischen Merkmalen ausgestattet werden. Beispielsweise können sehr empfindliche Textilien beim Waschen ohne oder mit nur geringer Trommeldrehung getaucht werden. Ein Schleuderspülprogramm kann eingesetzt werden, bei dem die Wäsche im Spülprogrammabschnitt durch wiederholtes Eintauchen bei niedriger Trommelposition gespült und die Lauge bei höherer Trommelposition abgeschleudert wird. Mittels einstellbarer Neigung der Wäschetrommel 3 kann der Wäschefall im Drehbetrieb beeinflusst werden. Dazu kann die Neigung jeweils fest justiert sein, sogar mit negativem Neigungswinkel, oder oszillieren. Auch kann die veränderliche Neigung der Wäschetrommel neben der Trommeldrehung als Verfahrenselement eines Betriebsprogramms verwendet werden.

Durch die feste Position des Laugenbehälters 5 ist es konstruktiv einfacher möglich, Zwischenspeicher für Spüllauge mit dem Laugenbehälter 5 zu verbinden. Durch die einstellbare Höhenposition, Neigung und Fixierung der Wäschetrommel 3 ist ein ergonomisch günstigeres Be- und Entladen der Wäschetrommel möglich. Dies ergibt einen Komfortgewinn gegenüber den marktüblichen Waschmaschinen. Bei konstruktiven Komponenten im oder am Laugenbehälter 5, für die ihr Abstand zum Trommelmantel 11 der Wäschetrommel 3 eine kritische Größe ist, z. B. beim Einsatz einer induktiven Heizung des Mantels der Wäschetrommel, ist es von großem Vorteil, dass dieser Abstand durch eine Höhenjustierung der Wäschetrommel 3 genau eingestellt werden kann.

## Patentansprüche

1. Waschmaschine mit einer Wäschetrommel (3), und einer Programmsteuereinrichtung, wobei die Wäschetrommel (3) Innerhalb eines Laugenbehälters (5) drehbar gelagert ist, der innerhalb eines umschließenden Gehäuses (1) fest mit ihm verbunden ist, deren Drehachse (4) gegenüber dem Laugenbehälter (5) in ihrer Höhe variabel ist und die durch außerhalb des Laugenbehälters (5) angebrachte elastische Elemente (20 und 21) zusammen mit einer Antriebseinheit (17) innerhalb des Gehäuses (1) schwingend aufgehängt ist, **dadurch gekennzeichnet, dass** an einem mit dem Lager (16) für die Antriebswelle (14) der Wäschetrommel (3) fest verbundenen Teil (15) eine Lageneinstelleinrichtung (22) angreift, durch die die Höhe und/oder der Winkel der Drehachse (4) in Grenzen in Abhängigkeit von einem Programmabschnitt der Wäschebehandlung eingestellt werden kann.

2. Waschmaschine nach Anspruch 1, **dadurch gekennzeichnet, dass** die Wäschetrommel (3) an ihrer Rückseite eine steife Rückwand (13) aufweist, die fest mit der Antriebswelle (14) eines Trommelantriebs (17) verbunden ist, die in einer Trägerscheibe (15) gelagert ist, und dass der Laugenbehälter (5) im wesentlichen aus einem Mantelteil (7) geformt ist, der frontseitig fest und dicht mit dem Gehäuse (1) verbunden ist und rückseitig mit einem Rand (9) des Mantelteils (7) eine Öffnung bildet, In welche die Wäschetrommel (3) in den Laugenbehälter (5) von hinten eingesetzt ist, deren Trägerscheibe (15) über eine ringförmige Faltenmembran (10) mit dem Rand (9) des Mantelteils (7) dichtend verbunden ist.

3. Waschmaschine nach Anspruch 2, **dadurch gekennzeichnet, dass** mit der Trägerscheibe (15) mindestens zwei Trägerarme (18 und 19) verbunden sind, welche den Rand (9) des Mantelteils (7) übergreifen sowie außerhalb des Laugenbehälters (5) etwa parallel zur Kontur des Manteltells (7) nach vorn gerichtet sind und über elastischen Verbindungen (20 und 21) an das Gehäuse (1) angelenkt sind.

4. Waschmaschine nach einem der Ansprüche 1 bis 3, **dadurch gekennzeichnet, dass** die Lageneinstelleinrichtung (22) an dem mit dem Lager (16) fest verbundenen Teil (15) angreift.

5. Waschmaschine nach einem der Ansprüche 1 bis 4, **dadurch gekennzeichnet, dass** die Lageneinstelleinrichtung (22) zwischen mindestens einer der elastischen Verbindungen (20) und dem Gehäuse (1) eingebaut ist und zwei Einstell-Frelheitsgrade (26 und 27) aufweist, nämlich einen (27) in Richtung der Tiefe des Gehäuses (1) und einen zweiten (26) in Richtung der Höhe des Gehäuses (1).

6. Waschmaschine nach Anspruch 4 oder 5, **dadurch gekennzeichnet, dass** der Frelheitsgrad (26) in Richtung der Höhe des Gehäuses (1) der Einstellbarkeit der Höhe der Drehachse (4) der Wäschetrommel (3) In Bezug zum Laugenbehälter (5) zugeordnet ist.

7. Waschmaschine nach Anspruch 4 oder 5, **dadurch gekennzeichnet, dass** der Freiheitsgrad (27) in Richtung der Tiefe des Gehäuses (1) der Einstellbarkeit des Winkels der Drehachse (4) der Wäschetrommel (3) zugeordnet ist.

8. Waschmaschine nach einem der vorstehenden Ansprüche mit einer Programmsteuereinrichtung (29) und mit darin gespeicherten Programmsequenzen für mindestens eine aktive Waschphase und für mindestens eine Schleuderphase, **dadurch gekennzeichnet, dass** in der Programmsteuereinrichtung (29) für die Höhen- und/oder die Winkellage der Drehachse (4) der Wäschetrommel (3) ein jeweils zugeordnetes Maß in Abhängigkeit von den Programmsequenzen vorbestimmt ist.

9. Verfahren zum Betreiben einer Waschmaschine mit einer Wäschetrommel (3), die innerhalb eines Laugenbehälter (5) drehbar gelagert ist, der innerhalb eines umschließenden Gehäuses (1) fest mit ihm verbunden ist, deren Drehachse (4) gegenüber dem Laugenbehälter (5) in ihrer Höhe variabel ist und die durch außerhalb des Laugenbehälters (5) angebrachte elastische Elemente (20 und 21) zusammen mit einer Antriebseinheit (17) innerhalb des Gehäuses (1) schwingend aufgehängt ist, **dadurch gekennzeichnet, dass** an einem mit dem Lager (16) für die Antriebswelle (14) der Wäschetrommel (3) fest verbundenen Teil (15) eine Lageeinstelleinrichtung (22) angreift, durch die die Höhe der Drehachse (4) relativ zum Laugenbehälter (5) in Abhängigkeit von einem Programmabschnitt der Wäschebehandlung in Grenzen eingestellt werden kann.

10. Verfahren nach Anspruch 9, **dadurch gekennzeichnet, dass** der Winkel der Drehachse (4) relativ zum Laugenbehälter (5) in Abhängigkeit von einem Programmabschnitt der Wäschebehandlung eingestellt wird.

11. Verfahren nach einem der Ansprüche 9 oder 10, **dadurch gekennzeichnet, dass** die Waschmaschine eine Programmsteuereinrichtung (29) und darin gespeicherten Programmsequenzen für mindestens eine aktive Waschphase und für mindestens eine Schleuderphase umfasst und dass in der Programmsteuereinrichtung (29) für die Höhen- und/oder die Winkellage der Drehachse (4) der Wäschetrommel (3) ein jeweils zugeordnetes Maß in Abhängigkeit von den Prograrnmsequenzen vorbestimmt wird.

## Claims

1. Washing machine with a laundry drum (3) and a program control device, wherein the laundry drum (3) is rotatably mounted within a solution container (5) which, within a surrounding housing (1), is fixedly connected therewith, the axis (4) of rotation of the drum being variable in its height relative to the solution container (5) and the drum being suspended together with a drive unit (17) within the housing (1) in oscillatory manner by resilient elements (20 and 21) mounted outside the solution container (5), **characterised in that** a position setting device (22) engages a part (15) fixedly connected with the bearing (16) for the drive shaft (14) of the laundry drum (3), the height and/or angle of the axis (4) of rotation being settable by the setting device within limits in dependence a program step of the laundry treatment.

2. Washing machine according to claim 1, **characterised in that** the laundry drum (3) has at its rear side a stiff back wall (13) which is fixedly connected with the drive shaft (14) of a drum drive (17), which shaft is mounted in a carrier disc (15), and that the solution container (5) is formed substantially from a casing part (7), which at the front side is fixedly and tightly connected with the housing (1) and at the rear side forms, together with an edge (9) of the casing part (7), an opening in which the laundry drum (3) is inserted into the solution container (5) from the back, the carrier disc (15) of which is sealingly connected with the edge (9) of the casing part (7) by way of an annular fold diaphragm (10).

3. Washing machine according to claim 2, **characterised in that** at least two carrier arms (18 and 19) are connected with the carrier disc (15), which arms engage over the edge (9) of the casing part (7) as well as outside the solution container (5) are oriented forwardly approximately parallel to the profile of the casing part (7) and articulated to the housing (1) by way of resilient connections (20 and 21).

4. Washing machine according to any one of claims 1 to 3, **characterised in that** the position setting device (22) engages the part (15) fixedly connected with the bearing (16).

5. Washing machine according to any one of claims 1 to 4, **characterised in that** the position setting device (22) is installed between at least one of the resilient connections (20) and the housing (1) and has two degrees (26 and 27) of setting freedom, namely a first (27) in the direction of the depth of the housing (1) and a second (26) in the direction of the height of the housing (1).

6. Washing machine according to claim 4 or 5, **characterised in that** the degree (26) of freedom in the direction of the height of the housing (1) is associated with the settability of the height of the axis (4) of rotation of the laundry drum (3) with respect to the solution container (5).

7. Washing machine according to claim 4 or 5, **characterised in that** the degree (27) of freedom in the direction of the depth of the housing (1) is associated with the settability of the angle of the axis (4) of rotation of the laundry drum (3).

8. Washing machine according to any one of the preceding claims with a program control device (29) and program sequences stored therein for at least one active washing phase and for at least one spinning phase, **characterised in that** a respectively associated dimension for the height position and/or angular position of the axis (4) of rotation of the laundry drum (3) is predetermined in the program control device (29) in dependence on the program sequences.

9. Method operating a washing machine with a laundry drum (3), which is rotatably mounted within a solution container (5) which, within a surrounding housing (1), is fixedly connected therewith, the axis (4) of rotation of the drum being variable in its height relative to the solution container (5) and the drum being suspended together with a drive unit (17) within the housing (1) in oscillatory manner by resilient elements (20 and 21) mounted outside the solution container (5), **characterised in that** a position setting device (22) engages a part (15) fixedly connected with the bearing (16) for the drive shaft (14) of the laundry drum (3), the height of the axis (4) of rotation relative to the solution container (5) being settable by the setting device within limits in dependence on a program section of the laundry treatment.

10. Method according to claim 9, **characterised in that** the angle of the axis (4) of rotation relative to the solution container (5) is set in dependence on a program section of the laundry treatment.

11. Method according to one of claims 9 and 10, **characterised in that** the washing machine comprises a program control device (29) and program sequences stored therein for at least one active washing phase and for at least one spinning phase and that a respectively associated dimension for the height position and/or angular position of the axis (4) of rotation of the laundry drum (3) is predetermined in the program control device (29) in dependence on the program sequences.

## Revendications

1. Lave-linge muni d'un tambour à linge (3) et d'un dispositif de commande à programme, le tambour à linge (3) étant logé de manière rotative à l'intérieur d'un réservoir de liquide de lavage (5) qui est relié à lui de manière fixe à l'intérieur d'un boîtier (1) entourant, dont l'axe de rotation (4) est variable dans sa hauteur par rapport au réservoir de liquide de lavage (5) et qui est suspendu de manière oscillatoire à l'intérieur du boîtier (1) au moyen d'éléments élastiques (20 et 21), installés à l'extérieur du réservoir de liquide de lavage (5), en coopération avec une unité d'entraînement (17), **caractérisé en ce qu'**un dispositif de réglage de position (22) a prise sur une pièce (15) reliée de manière fixe au palier (16) ménagé pour l'arbre d'entraînement (14) du tambour à linge (3), au moyen duquel dispositif de réglage de position la hauteur et/ou l'angle de l'axe de rotation (4) peuvent être réglés dans des limites en fonction d'une section de programme du traitement de linge.

2. Lave-linge selon la revendication 1, **caractérisé en ce que** le tambour à linge (3) présente sur sa face arrière une paroi arrière rigide (13) qui est reliée de manière fixe à l'arbre d'entraînement (14) d'un entraînement de tambour (17), lequel arbre d'entraînement est logé dans un disque porteur (15), et **en ce que** le réservoir de liquide de lavage (5) est essentiellement formé à partir d'une pièce d'enveloppe (7) qui, côté face, est reliée de manière fixe et étanche au boîtier (1) et qui, côté arrière, forme une ouverture avec un bord (9) de la pièce d'enveloppe (7), dans laquelle ouverture le tambour à linge est inséré depuis l'arrière dans le réservoir de liquide de lavage (5), dont le disque porteur (15) est relié par l'intermédiaire d'une membrane à soufflets au bord (9) de la pièce d'enveloppe (7) de manière à étanchéifier.

3. Lave-linge selon la revendication 2, **caractérisé en ce qu'**au moins deux bras de support (18 et 19) sont reliés au disque porteur (15), lesquels ont prise par-dessus le bord (9) de la pièce d'enveloppe (7) et sont dirigés vers l'avant à peu près parallèlement au contour de la pièce d'enveloppe (7), à l'extérieur du réservoir de liquide de lavage (5), et sont articulés au boîtier (1) par l'intermédiaire de liaisons élastiques (20 et 21).

4. Lave-linge selon l'une quelconque des revendications 1 à 3, **caractérisé en ce que** le dispositif de réglage de position (22) a prise sur la pièce (15) reliée de manière fixe au palier (16).

5. Lave-linge selon l'une quelconque des revendications 1 à 4, **caractérisé en ce que** le dispositif de réglage de position (22) est installé entre au moins une des liaisons élastiques (20) et le boîtier (1) et présente deux degrés de liberté de réglage (26 et 27), à savoir un (27) en direction de la profondeur du boîtier (1) et un deuxième (26) en direction de la hauteur du boîtier (1).

6. Lave-linge selon l'une quelconque des revendications 4 ou 5, **caractérisé en ce que** le degré de liberté (26) en direction de la hauteur du boîtier (1) correspond à la possibilité de réglage de la hauteur de l'axe de rotation (4) du tambour à linge (3) par rapport au réservoir de liquide de lavage (5).

7. Lave-linge selon l'une quelconque des revendications 4 ou 5, **caractérisé en ce que** le degré de liberté (26) en direction de la profondeur du boîtier (1) correspond à la possibilité de réglage de l'angle de l'axe de rotation (4) du tambour à linge (3).

8. Lave-linge selon l'une quelconque des revendications précédentes comprenant un dispositif de commande à programme (29) et comprenant des séquences de programmes qui y sont mémorisées pour au moins une phase de lavage active et pour au moins une phase d'essorage, **caractérisé en ce que** dans le dispositif de commande à programme (29), une mesure attribuée respectivement pour la position en hauteur et/ou la position angulaire de l'axe de rotation (4) du tambour à linge (3) est prédéterminée en fonction des séquences de programme.

9. Procédé de fonctionnement d'un lave-linge muni d'un tambour à linge (3) qui est logé de manière rotative à l'intérieur d'un réservoir de liquide de lavage (5) qui est relié à lui de manière fixe à l'intérieur d'un boîtier entourant (1), dont l'axe de rotation (4) est variable dans sa hauteur par rapport au réservoir de liquide de lavage (5) et qui est suspendu de manière oscillatoire à l'intérieur du boîtier (1) au moyen d'éléments élastiques (20 et 21), installés à l'extérieur du réservoir de liquide de lavage (5), en coopération avec une unité d'entraînement (17), **caractérisé en ce qu'**un dispositif de réglage de position (22) a prise sur une pièce (15) reliée de manière fixe au palier (16) pour l'arbre d'entraînement (14) du tambour à linge (3), au moyen duquel dispositif de réglage de position la hauteur de l'axe de rotation (4) peut être réglée dans des limites par rapport au réservoir de liquide de lavage (5) en fonction d'une section de programme du traitement de linge.

10. Procédé selon la revendication 9, **caractérisé en ce que** l'angle de l'axe de rotation (4) est réglé par rapport au réservoir de liquide de lavage (5) en fonction d'une section de programme du traitement de linge.

11. Procédé selon l'une quelconque des revendications 9 ou 10, **caractérisé en ce que** le lave-linge comprend un dispositif de commande à programme (29) et des séquences de programme qui y sont mémorisées pour au moins une phase de lavage active et pour au moins une phase d'essorage et **en ce que** dans le dispositif de commande à programme (29), une mesure attribuée respectivement pour la position en hauteur et/ou la position angulaire de l'axe de rotation (4) est prédéterminée en fonction des séquences de programme.
